**Europäisches Patentamt**

**European Patent Office**

**Office européen des brevets**

(11) Numéro de publication : **0 401 092 B1**

(12) **FASCICULE DE BREVET EUROPEEN**

(45) Date de publication du fascicule du brevet :
**04.11.92 Bulletin 92/45**

(51) Int. Cl.⁵ : **B60N 2/02**

(21) Numéro de dépôt : **90401385.1**

(22) Date de dépôt : **23.05.90**

(54) **Dispositif d'orientation d'un siège de véhicule automobile.**

(30) Priorité : **02.06.89 FR 8907701**

(43) Date de publication de la demande :
**05.12.90 Bulletin 90/49**

(45) Mention de la délivrance du brevet :
**04.11.92 Bulletin 92/45**

(84) Etats contractants désignés :
**DE GB IT**

(56) Documents cités :
**US-A- 2 770 287**
**US-A- 2 966 937**
**US-A- 3 021 107**
**US-A- 3 632 076**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Langlois, Michel**
**6, rue de Bretagne**
**F-78180 Montigny-le-Bretonneux (FR)**

(74) Mandataire : **Boivin, Claude**
**9, rue Edouard-Charton**
**F-78000 Versailles (FR)**

EP 0 401 092 B1

Jouve, 18, rue Saint-Denis, 75001 PARIS

## Description

Dans un virage, l'utilisateur d'un siège de véhicule automobile est soumis à l'action de la force centrifuge qui tend à l'incliner d'un côté ou de l'autre, ce qui nuit à son confort.

Le document US-A-2 770 287 décrit un siège qui peut pivoter autour d'un axe situé dans un plan longitudinal et oblique par rapport à la verticale. Mais ce siège n'est prévu que pour pallier les inégalités de la route.

La présente invention a pour objet un dispositif d'orientation d'un siège de véhicule automobile qui diminue l'effet de la force centrifuge dans un virage et augmente ainsi le confort du passager.

Le dispositif d'orientation selon l'invention est caractérisé en ce qu'il comprend des moyens pour détecter l'accélération latérale à laquelle le siège est soumis, et des moyens commandés par les moyens de détection pour faire pivoter le siège autour dudit axe.

Des caractéristiques, ayant trait à un mode de réalisation de l'invention sont précisés dans les revendications dépendantes 2 à 7.

On a décrit ci-après, à titre d'exemple non limitatif, un mode de réalisation d'un siège muni du dispositif d'orientation selon l'invention, avec référence aux dessins annexés dans lesquels:

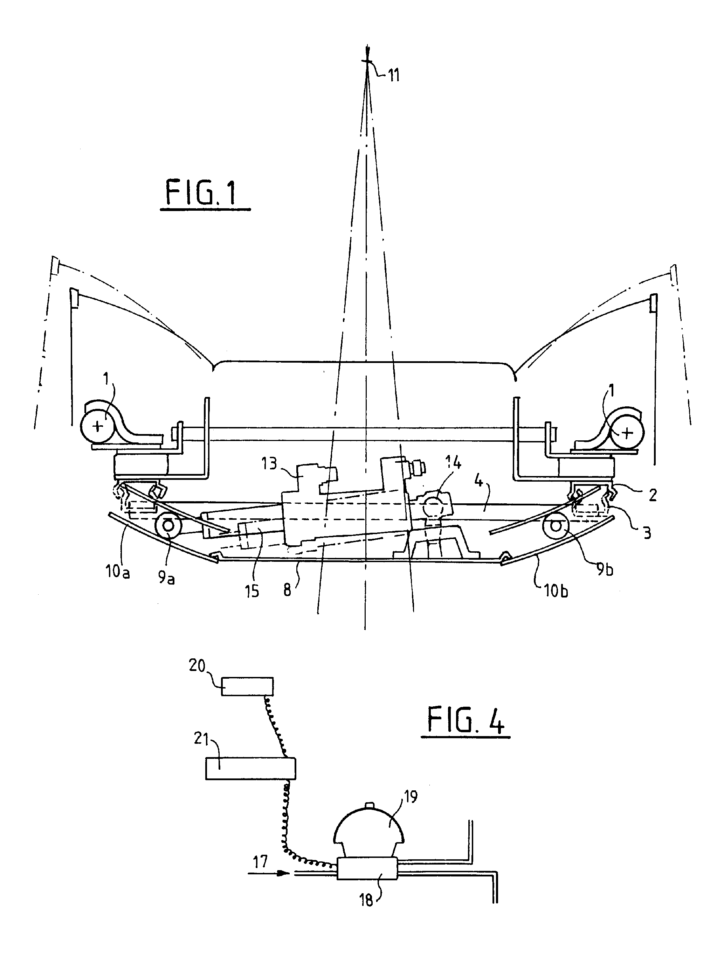

La Figure 1 est une vue de face du siège

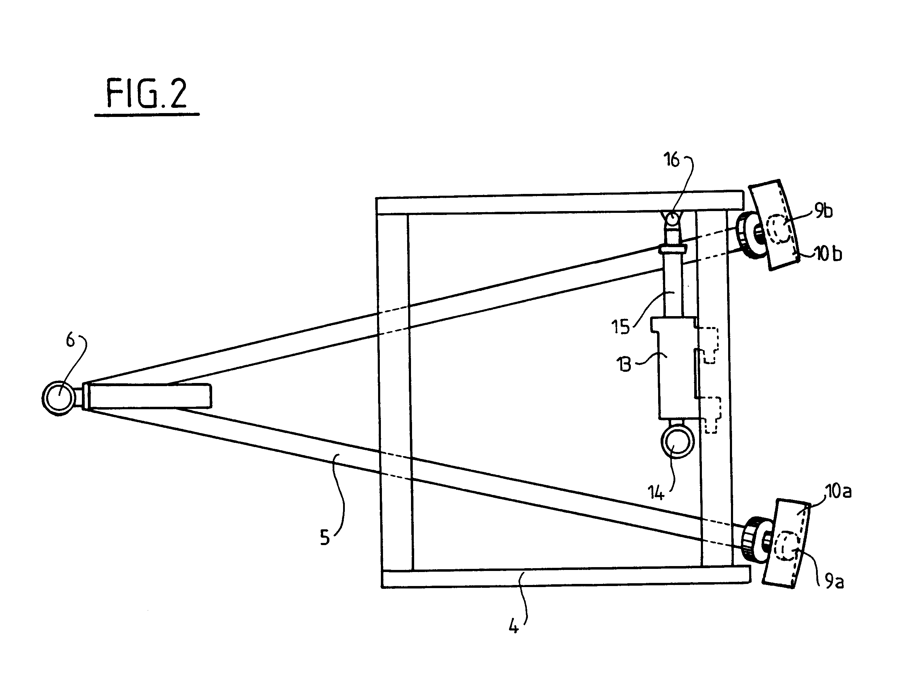

La Figure 2 est une vue en plan des moyens supportant le siège

La Figure 3 est une vue latérale du siège

La Figure 4 montre l'alimentation du vérin de commande de pivotement.

Au dessin, on voit l'armature intérieure 1 d'un siège de véhicule automobile qui comporte à sa partie inférieure des glissières crantées femelles 2 pouvant coulisser longitudinalement sur des glissières crantées mâles 3.

Les glissières 3 sont solidaires d'un cadre 4 sous lequel sont soudés deux tirants 5 disposés en V. Les extrémités avant de ces deux tirants sont fixées à une même rotule 6 qui les relie au soubassement 8 du véhicule et se trouve dans le plan médian du siège; à son extrémité arrière, chacun des tirants porte un galet 9a ou 9b qui est mobile dans une glissière curviligne 10a ou 10b fixée au soubassement 8; les glissières 10a et 10b sont concentriques, leur centre commun 11 étant disposé dans le même plan vertical que la rotule 6.

Le cylindre extérieur d'un vérin 13 est relié au soubassement 8 par l'intermédiaire d'une rotule 14 alors que sa tige de piston 15 est reliée au cadre 4 par une rotule 16. Ce vérin permet ainsi de faire pivoter le siège autour de l'axe X-X′ passant par le centre de la rotule 6 et le centre 11 des glissières 10a et 10b, donc situé dans le plan médian longitudinal du siège, mais oblique par rapport à la verticale.

Le vérin 13 est alimenté à partir d'une source de haute pression hydraulique 17 par une électrovanne 18 qui est associée à un régulateur 19 et pilotée par un capteur 20 par l'intermédiaire d'un calculateur 21.

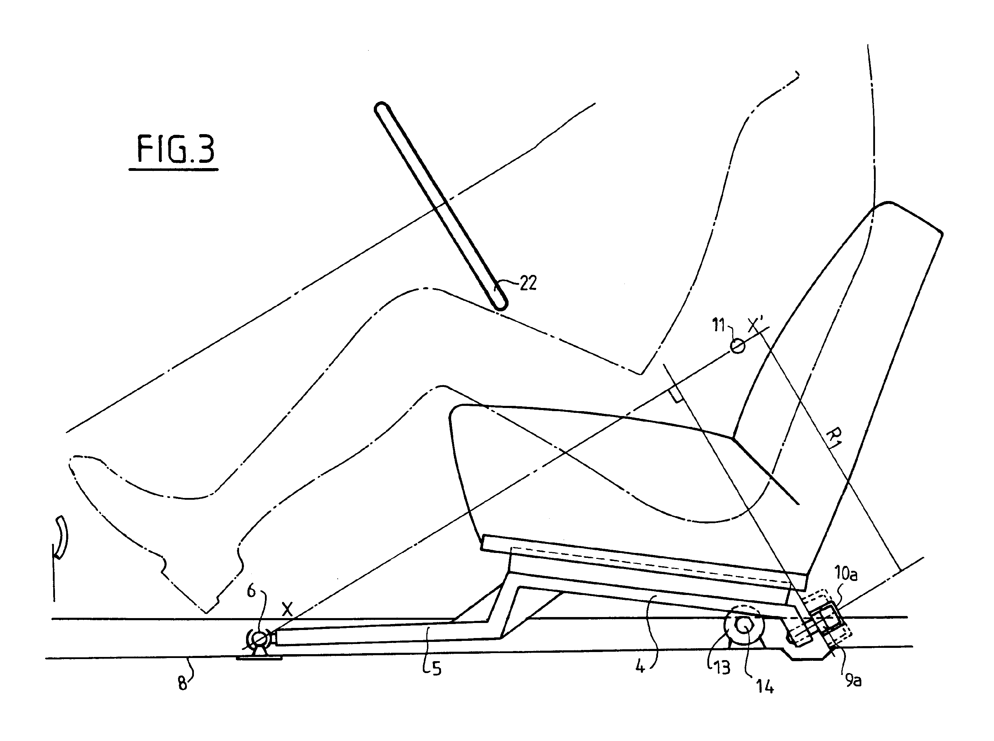

La position longitudinale du siège peut être modifiée à volonté par le passager par l'intermédiaire des glissières crantées 2-3. Mais, de plus, dans un virage, l'accélération transversale due à la force centrifuge est détectée par le capteur 20 de sorte que la pression hydraulique agit sur le vérin 18. Celui-ci assure un basculement du siège autour de l'axe X-X′, dans un sens ou dans l'autre suivant le sens du virage; la valeur angulaire de ce déplacement est d'environ 5° de part et d'autre du plan vertical. La variation de l'orientation du siège diminue la sensation de déport vers l'extérieur du virage, ce qui augmente le confort. Pour les conducteurs, le changement de position du buste n'a d'influence ni sur la position des mains sur le volant puisque l'axe X-X′ se situe assez près de l'axe du volant 22 et lui est sensiblement parallèle (Figure 3), ni au niveau des pieds, la rotule 6 étant située à proximité des pédales de commande; la position du chauffeur face à son volant 22 est donc stable.

Il va de soi que la présente invention telle que revendiquée, ne doit pas être considérée comme limitée au mode de réalisation décrit et représenté, mais en couvre au contraire, toutes les variantes. C'est ainsi, par exemple, que le vérin 13 pourrait être remplacé par un moteur électrique pas-à-pas.

## Revendications

1. Dispositif d'orientation d'un siège (14) de véhicule automobile comportant des moyens (6-9a-9b-10a-10b) permettant au siège de pivoter autour d'un axe X-X′ situé dans un plan longitudinal et vertical du siège et oblique par rapport à la verticale,
caractérisé en ce qu'il comporte des moyens (20) pour détecter l'accélération latérale, à laquelle le siège est soumis, et de moyens (13) commandés par les moyens de détection (20) pour faire pivoter le siège autour dudit axe.

2. Dispositif selon la revendication 1,
caractérisé en ce que le siège est monté sur un support (4-5) dont la partie avant est reliée par une rotule (6) au soubassement (8) du véhicule et dont la partie arrière porte des galets (9a-9b) mobiles dans des glissières curvilignes (10a-10b), fixées sur ce soubassement (8).

3. Dispositif selon la revendication 2,
caractérisé en ce que les glissières (2-3) de réglage en position du siège sont montées sur un cadre (4) solidaire de tirants (5) portant la rotule (6) et les galets (9a-9b).

4. Dispositif selon l'une des revendications 1 à 3, caractérisé en ce que les moyens de commande du pivotement comprennent un vérin hydraulique (13).

5. Dispositif selon l'une quelconque des revendications 1 à 3, caractérisé en ce que les moyens de commande du pivotement comprennent un moteur électrique pas-à-pas.

6. Dispositif selon l'une quelconque des revendications précédentes, caractérisé en ce que l'axe de pivotement X-X' est sensiblement parallèle à l'axe du volant (22).

7. Dispositif selon l'une des revendications 2 à 6, caractérisé en ce que la rotule (6) est située à proximité des pédales de commande.

**Patentansprüche**

1. Neigungseinrichtung für einen Kraftfahrzeugsitz (14), bestehend aus Mitteln (9a, 9b, 10a, 10b) zum Neigen des Sitzes um eine Achse X-X', die auf der in Längsrichtung und senkrecht liegenden Ebene verläuft, dadurch gekennzeichnet, daß sie Mittel zur Erkennung der Querbeschleunigung besitzt, der der Sitz ausgesetzt ist, sowie Mittel (13) zur Neigung des Sitzes um die o.a. Achse, wobei die Steuerung der Neigung durch die Erkennungsmittel (20) erfolgt.

2. Neigungseinrichtung nach Patentanspruch 1, dadurch gekennzeichnet, daß der Sitz auf einer Halterung (4, 5) befestigt ist, deren Vorderteil über ein Kugelgelenk (6) mit dem Fahrzeugboden (8) verbunden ist, und deren Hinterteil Rollen (9a, 9b) besitzt, welche in am Fahrzeugboden (8) befestigten gekrümmten Laufschienen (10a, 10b) hin und herrollen können.

3. Neigungseinrichtung nach Patentanspruch 2, dadurch gekennzeichnet, daß die Gleitschienen (2, 3) zur Einstellung des Sitzes in Längsrichtung auf einem Tragrahmen (4) befestigt sind, der fest mit Streben (5) verbunden ist, welche das Kugelgelenk (6) und die Rollen (9a, 9b) tragen.

4. Neigungseinrichtung nach einem beliebigen der Patentansprüche 1 bis 3, dadurch gekennzeichnet, daß die Mittel zur Steuerung der Neigung einen hydraulischen Druckzylinder (13) beinhalten.

5. Neigungseinrichtung nach einem beliebigen der Patentansprüche 1 bis 3, dadurch gekennzeichnet, daß die Mittel zur Steuerung der Neigung einen elektrischen Schrittmotor beinhalten.

6. Neigungseinrichtung nach einem beliebigen der vorhergehenden Patentansprüche, dadurch gekennzeichnet, daß die Neigungsachse X-X' weitgehend Parallel zur Achse des Lenkrades (22) verläuft.

7. Neigungseinrichtung nach einem beliebigen der Patentansprüche 2 bis 6, dadurch gekennzeichnet, daß das Kugelgelenk (6) sich in der Nähe der Fußpedale befindet.

**Claims**

1. Device for orientating a motor vehicle seat (14) and comprising means (6-9a-9b-10a-10b) enabling the seat to pivot around an axis X-X' situated inside a longitudinal and vertical plane of the seat and oblique with respect to vertical, wherein it comprises means (20) to detect lateral acceleration to which the seat is subjected, and means (13) controlled by the detection means (20) to make the seat pivot around said axis.

2. Device according to claim 1, wherein the seat is mounted on a support (4-5) whose front portion is connected by a joint (6) to the underframe (8) of the vehicle and whose rear portion bears rollers (9a-9b) which are mobile in the curvilinear guide rails (10a-10b) and fixed to this underframing (8)

3. Device according to claim 2, wherein the guide rails (2-3) for adjusting the position of the seat are mounted on a frame (4) integral with bars (5) bearing the joint (6) and the rollers (9a-9b).

4. Device according to any one of claims 1 to 3, wherein the means for controlling pivoting include a hydraulic jack (13).

5. Device according to any one of claims 1 to 3, wherein the pivoting control means include a step or pulse electric motor.

6. Device according to any one of the preceding claims, wherein the pivoting axis X-X' is approximately parallel to the axis of the steering wheel (22).

7. Device according to any one of claims 2 to 6,

wherein the joint (6) is situated close to the control pedals.

FIG.1

FIG.4

FIG.2

FIG.3

EP 0 401 092 B1